# EUROPÄISCHE PATENTANMELDUNG

(11) **EP 4 227 168 A1**
(43) Veröffentlichungstag der Anmeldung: **16.08.2023**
(21) Anmeldenummer: 22156660.7
(22) Anmeldetag: 14.02.2022
(51) Int. Cl.: B60R 21/205

(54) **GASSACK FÜR EINEN FAHRERSITZPLATZ EINES FAHRZEUGS SOWIE GASSACKMODUL, FAHRZEUGINSASSENSICHERHEITSSYSTEM UND FAHRZEUG MIT EINEM SOLCHEN GASSACK**

(71) Anmelder: ZF Automotive Germany GmbH, 73553 Alfdorf (DE); ZF Automotive Systems Poland Sp. z.o.o., 42-200 Czestochowa (PL)
(72) Erfinder: SCHMID, Simon, 73572 Heuchlingen (DE); MALCZAK, Pawel, 42-200 Czestochowa (PL); TAKADA, Hidehisa, 165-0031 Tokyo (JP)
(74) Vertreter: ZF Patentabteilung - DIPS

(57) **Zusammenfassung**

Die Erfindung betrifft einen Gassack (100) für einen Fahrersitzplatz eines, insbesondere mehrspurigen, Fahrzeugs mit einer Seitenstoffbahn (10) und einer Hauptstoffbahn (20), deren Ränder (11, 21) so miteinander vernäht sind, dass sich ein Gassackvolumen bildet, wobei die Seitenstoffbahn (10)
- zwei Flügelabschnitte (13), die jeweils eine Seitenwand des Gassacks (100) bilden, und
- einen mittleren Abschnitt (14) aufweist, der die Flügelabschnitte (13) verbindet, und
wobei die Hauptstoffbahn (20)
- einen oberen Abschnitt (25) und einen unteren (24) Abschnitt aufweist, die mit den Flügelabschnitten (13) vernäht und durch einen vorderen Abschnitt (23) miteinander verbunden sind, und
- im unteren Abschnitt (24) wenigstens eine Klappe (26) mit einem zusätzlichen Stoffstreifen (30) oder eine Raffnaht (62) vorgesehen ist,
und wobei wenigstens ein sich durch das Gassackvolumen erstreckendes Fangband (40) einerseits mit dem oberen Abschnitt (25) und andererseits mit der Klappe (26) oder der Raffnaht (62) verbunden ist, um im befüllten Zustand des Gassacks (100) eine Einwölbung (45) zur Umgehung einer Störkontur zu bilden.

## Beschreibung

Die Erfindung betrifft einen Gassack für einen Fahrersitzplatz eines, insbesondere mehrspurigen, Fahrzeugs. Ferner betrifft die Erfindung ein Gassackmodul, ein Fahrzeuginsassensicherheitssystem und ein Fahrzeug mit einem solchen Gassack.

Zum Schutz von Fahrzeuginsassen im Falle eines Unfalls bzw. Aufpralls sind seit vielen Jahren Airbags im Einsatz, die einen Gassack aufweisen, der sich bei einem Aufprall selbstständig vor den Fahrzeuginsassen entfaltet. Dabei wird unterschieden zwischen fahrerseitigen und beifahrerseitigen Gassäcken. Beifahrerseitige Gassäcke sind üblicherweise im Armaturenbrett angeordnet und weisen im Vergleich zu fahrerseitigen Gassäcken, die im Lenkrad angeordnet sind, ein größeres Gassackvolumen auf. Sie haben daher eine größere Rückhaltefläche und bieten daher einen vergleichsweise besseren Schutz. Die Anbringung von Gassäcken im Armaturenbrett, das ausreichend Platz für einen solchen Beifahrergassack bereitstellt, ist für fahrerseitige Gassäcke erschwert. Dennoch besteht ein Bestreben darin, die Schutzwirkung fahrerseitiger Gassäcke zu verbessern. Dabei bestehen Überlegungen, auch auf der Fahrerseite Gassäcke im Armaturenbrett zu platzieren. Problematisch ist, dass ein vor dem Armaturenbrett angeordnetes Lenkrad eine Entfaltung eines solchen fahrerseitigen Gassacks behindern kann. Ebenso können bei beifahrerseitigen Gassäcken große Displays beziehungsweise große Bildschirme, die beispielsweise der Unterhaltung des Fahrzeuginsassen dienen, eine Entfaltung eines bekannten Beifahrergassacks behindern.

Die Aufgabe der Erfindung besteht vor diesem Hintergrund darin, einen Gassack für den Fahrersitzplatz eines, insbesondere mehrspurigen, Fahrzeugs anzugeben, der eine verbesserte Schutzwirkung aufweist, wobei sich diese an der Funktionsweise eines Beifahrergassacks orientiert. Ferner ist es Aufgabe der Erfindung ein Gassackmodul, ein Fahrzeuginsassensicherheitssystem sowie ein Fahrzeug mit einem solchen Gassack anzugeben.

Erfindungsgemäß wird diese Aufgabe im Hinblick auf den Gassack durch die Gegenstände der Patentansprüche 1 oder 8 gelöst. Im Hinblick auf das Gassackmodul, das Fahrzeuginsassensicherheitssystem und das Fahrzeug wird die vorgenannte Aufgabe durch die Gegenstände der Patentansprüche 13, 14 bzw. 15 gelöst.

Konkret beruht die Erfindung auf dem Gedanken, einen Gassack für einen Fahrersitzplatz eines, insbesondere mehrspurigen, Fahrzeugs anzugeben, wobei das Fahrzeug eine Seitenstoffbahn und eine Hauptstoffbahn aufweist. Die Ränder der Seitenstoffbahn und der Hauptstoffbahn sind so miteinander vernäht, dass sich ein Gassackvolumen bildet. Die Seitenstoffbahn weist dabei zwei Flügelabschnitte auf, die jeweils eine Seitenwand des Gassacks bilden, und einen mittleren Abschnitt, der die Flügelabschnitte verbindet. Die Hauptstoffbahn weist einen oberen Abschnitt und einen unteren Abschnitt auf, die mit den Flügelabschnitten vernäht und durch einen vorderen Abschnitt miteinander verbunden sind, wobei ferner im unteren Abschnitt der Hauptstoffbahn eine Klappe mit einem zusätzlichen Stoffstreifen oder eine Raffnaht vorgesehen ist. Wenigstens ein sich durch das Gassackvolumen erstreckendes Fangband ist einerseits mit dem oberen Abschnitt und andererseits mit der Klappe oder Raffnaht verbunden, um im befüllten Zustand des Gassacks eine Einwölbung zur Umgehung einer Störkontur zu bilden.

Der erfindungsgemäße Gassack weist einen einfachen Aufbau auf, wobei im Wesentlichen das Gassackvolumen durch die Seitenstoffbahn und die Hauptstoffbahn gebildet ist. Die Flügelabschnitte der Seitenstoffbahn bilden dabei im befüllten Zustand des Gassacks jeweils eine Seitenwand desselben. Der mittlere Abschnitt der Seitenstoffbahn kann im Wesentlichen im Bereich eines Armaturenbretts angeordnet werden und nimmt vorzugsweise einen Gasgenerator auf bzw. steht mit einem solchen in Strömungsverbindung, um den Gassack ausgehend von dem mittleren Abschnitt der Seitenstoffbahn mit Gas zu befüllen.

Die Hauptstoffbahn ist mit der Seitenstoffbahn vorzugsweise so vernäht, dass die Hauptstoffbahn mit ihrem oberen und unteren Abschnitt jeweils eine Oberseite und eine Unterseite des befüllten Gassacks bildet. Der vordere Abschnitt der Hauptstoffbahn, der den oberen Abschnitt mit dem unteren Abschnitt verbindet, bildet vorzugsweise eine Frontfläche des befüllten Gassacks. Der vordere Abschnitt ist also vorzugsweise den Fahrzeuginsassen, insbesondere einem Fahrer bzw. einer Fahrerin, zugewandt. Der obere Abschnitt und der untere Abschnitt der Hauptstoffbahn sind jeweils mit einem der Flügelabschnitte der Seitenstoffbahn vernäht. Dies gilt insbesondere für die äußeren Ränder der Abschnitte, die vorzugsweise so miteinander vernäht sind, dass sich das Gassackvolumen bildet.

Der hier beschriebene Gassack eignet sich besonders für die Anordnung innerhalb eines Armaturenbretts im Bereich eines Fahrersitzplatzes eines Fahrzeugs. Durch die bei dem erfindungsgemäßen Gassack vorgesehene Einwölbung im befüllten Zustand des Gassacks wird dabei vorteilhaft erreicht, dass sich der Gassack um ein Lenkrad herum aufspannen und dabei das Lenkrad als Störkontur umgehen kann. Der Gassack kann sich also ungehindert entfalten. Indem der Gassack die Störkontur, insbesondere ein Lenkrad, umgeht, ergibt sich ein weiterer Vorteil. Der Gassack kann sich nämlich aufgrund der Einwölbung über ein Lenkrad legen und sich an diesem abstützen, wenn ein Fahrzeuginsasse bzw. eine Fahrzeuginsassin in den befüllten Gassack eintaucht. Wenn der Gassack die Störkontur auch seitlich umgreift, ist zudem eine Führung des Gassacks im befüllten Zustand erreicht, die zu einer hohen Stabilität des Gassacks führt. Alternativ kann der Gassack innerhalb eines Armaturenbretts im Bereich eines Beifahrersitzplatzes eines Fahrzeugs angeordnet sein und durch die im Gassack vorgesehene Einwölbung im befüllten Zustand des Gassacks kann vorteilhaft erreicht werden, dass sich der Gassack um ein Display herum aufspannen und dabei das Display als Störkontur umgehen kann.

Bei einer bevorzugten Ausführungsform des erfindungsgemäßen Gassacks ist vorgesehen, dass das Fangband so bemessen ist, dass beim Befüllen des Gassacks mit einem Gas der Abstand zwischen dem oberen Abschnitt und dem unteren Abschnitt der Hauptstoffbahn begrenzt/festgelegt ist. Der so begrenzte Teil des Gassacks bildet im Wesentlichen einen Überbrückungsabschnitt des befüllten Gassacks, der die Störkontur umgibt bzw. überbrückt. Dabei kann die Begrenzung, die das Fangband bereitstellt, so bemessen sein, dass ein Teil des Gassacks, insbesondere ein Abschnitt der Hauptstoffbahn so in Richtung des oberen Abschnitts gezogen wird, dass sich der Überbrückungsabschnitt über die Störkontur vorwölbt. Der Überbrückungsabschnitt kann dann in einen Wirkabschnitt übergehen, der einen Fahrzeuginsassen primär aufnimmt.

Es kann vorgesehen sein, dass der zusätzliche Stoffstreifen so mit dem unteren Abschnitt verbunden ist, dass sich die Klappe und der untere Stoffstreifen in einem faltenfreien Zustand in unterschiedlichen Ebenen erstrecken. Die Klappe kann insbesondere durch einen profilierten Schnitt bzw. Schlitz gebildet sein, der sich durch den unteren Abschnitt der Hauptstoffbahn erstreckt. Konkret kann die Klappe durch einen im Wesentlichen U-förmigen Schlitz im unteren Abschnitt der Hauptstoffbahn begrenzt sein, dessen Schlitzränder mit dem zusätzlichen Stoffstreifen verbunden sind. Auf diese Weise wird eine geometrisch vorgegebene Einwölbung bereitgestellt.

Alternativ oder zusätzlich kann vorgesehen sein, dass die Hauptstoffbahn im unteren Abschnitt mittels der Raffnaht mit einer Ansatzstoffbahn verbunden ist. Bei dieser Ausführungsform der Erfindung ist die Hauptstoffbahn folglich zweigeteilt, wobei ein kleinerer Teil der Hauptstoffbahn durch Ansatzstoffbahn gebildet ist. Die Ansatzstoffbahn wird separat produziert bzw. aus einer Stoffbahn geschnitten und vorzugsweise mittels einer Raffnaht mit der Hauptstoffbahn verbunden. Die Raffnaht zieht den Stoff der Hauptstoffbahn gezielt zusammen, so dass sich beim Befüllen des Gassacks die Einwölbung bildet.

Besonders bevorzugt ist es, wenn die Störkontur ein Lenkrad ist, wobei die Einwölbung so ausgebildet ist, dass sich der Gassack im befüllten Zustand seitlich um das Lenkrad und über eine Vorderseite des Lenkrads erstreckt. Die seitliche Erstreckung um das Lenkrad sorgt einerseits dafür, dass die Expansion des Gassacks durch das Lenkrad nicht wesentlich beeinträchtigt wird. Andererseits dient das seitliche Umgreifen des Lenkrads zur Führung des Gassacks und folglich zu dessen Stabilität. Indem sich der Gassack über die Vorderseite des Lenkrads erstreckt, ist ein effektiver Schutz für den Fahrer bzw. eine Fahrerin eines Fahrzeugs erreicht. Der Gassack kann sich dabei an der Vorderseite des Lenkrads abstützen und ist insoweit vergleichsweise stabil.

Bei einer weiteren Ausführungsform der Erfindung erstreckt sich ein zusätzliches Fangband vom mittleren Abschnitt der Seitenstoffbahn zum vorderen Abschnitt der Hauptstoffbahn. Das zusätzliche Fangband begrenzt beim Befüllen des Gassacks einen Abstand zwischen dem mittleren Abschnitt der Seitenstoffbahn und dem vorderen Abschnitt der Hauptstoffbahn, so dass im befüllten Zustand des Gassacks ein seitlicher Fortsatz ausgebildet ist, der über den vorderen Abschnitt vorsteht. Bei modernen Fahrzeugen werden neben Frontalgassäcken auch Seitenscheibengassäcke eingesetzt, um Fahrzeuginsassen zu schützen. Bei besonderen Aufprallsituationen, beispielsweise einem Schrägaufprall, besteht jedoch die Gefahr, dass ein Kopf eines Fahrzeuginsassen bei einem Aufprall in eine Lücke zwischen dem Seitenfenstergassack und dem Frontalgassack gelangt, so dass weder der Seitenfenstergassack noch der Frontalgassack seine volle Schutzwirkung entfalten können. Durch den zuvor beschriebenen seitlichen Fortsatz kann diese Lücke zwischen dem Gassack und einem Seitenfenstergassack geschlossen werden, so dass die Schutzwirkung des Gassacks deutlich erhöht ist und dadurch in einer Schrägaufprallsituation insbesondere der Fahrzeuginsasse vor einem direktem Kontakt mit einer A-Säule des Fahrzeugs geschützt werden kann.

Ein nebengeordneter Aspekt der Erfindung betrifft einen Gassack eines mehrspurigen Fahrzeugs, das ein Armaturenbrett und ein vor dem Armaturenbrett angeordnetes Lenkrad aufweist. Dieser Gassack umfasst einen Überbrückungsabschnitt, der sich im befüllten Zustand des Gassacks aus dem Armaturenbrett heraus und über das Lenkrad erstreckt. Ferner weist dieser Gassack einen Wirkabschnitt auf, der sich im befüllten Zustand des Gassacks vor dem Lenkrad aufspannt. Der Gassack kann zumindest im Wirkabschnitt eine rückwärtige Einwölbung aufweisen, die im befüllten Zustand des Gassacks das Lenkrad aufnimmt. Alternativ zu dem Lenkrad, kann sich der Überbrückungsabschnitt des Gassacks aus dem Armaturenbrett heraus und über ein vor dem Armaturenbrett beziehungsweise an der Vorderkante des Armaturenbretts angeordnetes Display erstrecken.

Die Beschreibung dieses Gassacks im Rahmen der vorliegenden Anmeldung bezieht sich generell auf dessen geometrische Form im vollständig befüllten Zustand. Dabei sieht die Erfindung vorteilhaft vor, dass der Gassack, der sich aus dem Armaturenbrett heraus entfaltet, mittels des Überbrückungsabschnitts um das Lenkrad wölbt und mit dem Wirkabschnitt das Lenkrad bzw. dessen Vorderseite überdeckt. Der Gassack kann sich auf diese Weise gut und sicher um das Lenkrad als Störkontur herum entfalten und stellt ein besonders großes Rückhaltegasvolumen bereit, um einen Fahrer der sich vor dem Lenkrad befindet, gut aufzunehmen. Der Wirkabschnitt deckt dabei das Lenkrad vorzugsweise vollständig ab, um einen direkten Aufprall des Fahrzeuginsassen auf das Lenkrad zu vermeiden.

Bei einer bevorzugten Ausführungsform des Gassacks ist im Überbrückungsabschnitt wenigstens ein Fangband vorgesehen, das die Entfaltung des Überbrückungsabschnitts begrenzt, um die rückwärtige Einwölbung zu bilden. Das Fangband ist vorzugsweise aus einem Stoffmaterial gebildet, insbesondere aus dem Stoffmaterial, das auch für den Gassack genutzt wird. Das Fangband ist also im unbenutzten Zustand des Gassacks vollständig in den Gassack eingefaltet, sorgt jedoch bei der Befüllung des Gassacks dafür, dass sich gegenüberliegende Stoffbahnabschnitte des Gassacks nicht beliebig auseinanderbewegen können, sondern in einer vorbestimmten Form gehalten werden. Dadurch wird die Entfaltung des Überbrückungsabschnitts begrenzt, wobei die Begrenzung vorzugsweise so gestaltet ist, dass sich der Überbrückungsabschnitt zwischen einer Windschutzscheibe und einem Lenkradkranz hindurch erstrecken kann.

Das Lenkrad selbst ist bei dieser Gestaltung des Gassacks vorzugsweise gassackfrei. Der hier beschriebene Gassack eines Fahrzeugs ersetzt im Wesentlichen den üblichen Lenkradgassack. Das hat weitere Vorteile, insbesondere im Hinblick auf die Gestaltungsfreiheit für das Design von Lenkrädern.

Weiter bevorzugt ist es, wenn ein seitlicher Fortsatz am Gassack vorgesehen ist, der im befüllten Zustand des Gassacks eine Lücke zwischen dem Wirkabschnitt und einem Seitenfenstergassack schließt. Der seitliche Fortsatz kann sich insbesondere an den Wirkabschnitt anschließen. Vorzugsweise wird der seitliche Fortsatz dadurch gebildet, dass innerhalb des Wirkabschnitts ein zusätzliches Fangband angeordnet ist, das die Entfaltung des Wirkabschnitts zumindest abschnittsweise begrenzt. Derjenige Teil des Wirkabschnitts, der durch das Fangband in seiner Entfaltung nicht begrenzt ist, kann dann den seitlichen Fortsatz bilden, der sich über den begrenzten Teil des Wirkabschnitts hinaus erstreckt und so die Lücke zum Seitenfenstergassack schließt.

Ein weiterer nebengeordneter Aspekt der Erfindung betrifft ein Gassackmodul zum Einbau in ein Armaturenbrett, insbesondere hinter einem Lenkrad oder einem Display, mit einem zuvor beschriebenen Gassack und einem Gasgenerator, der mit dem Gassack fluiddicht verbunden ist. Die Verbindung des Gasgenerators mit dem Gassack erfolgt beispielsweise über den mittleren Abschnitt der Seitenstoffbahn. Konkret kann im mittleren Abschnitt der Seitenstoffbahn eine Öffnung vorgesehen sein, die mit dem Gasgenerator verbunden ist bzw. an den Gasgenerator angebunden ist. Auf diese Weise ist sichergestellt, dass die Befüllung des Gassacks mit Gas aus dem Gasgenerator zentral erfolgt.

Im Rahmen der vorliegenden Anmeldung wird außerdem ein Fahrzeuginsassensicherheitssystem mit einem zuvor beschriebenen Gassack oder Gassackmodul offenbart und beansprucht. Ebenso betrifft die vorliegende Erfindung ein Fahrzeug mit einem zuvor beschriebenen Gassack, einem zuvor beschriebenen Gassackmodul und/oder einem zuvor erläuterten Fahrzeuginsassensicherheitssystem.

Die Erfindung wird im Folgenden anhand von Ausführungsbeispielen unter Bezugnahme auf die beigefügten schematischen Zeichnungen näher erläutert. Darin zeigen
Fig. 1 eine Seitenstoffbahn eines erfindungsgemäßen Gassacks nach einem bevorzugten Ausführungsbeispiel;
Fig. 2 eine Hauptstoffbahn eines erfindungsgemäßen Gassacks, zur Kombination mit der Seitenstoffbahn gemäß Fig. 1 nach einem bevorzugten Ausführungsbeispiel;
Fig. 3 einen zusätzlichen Stoffstreifen zur Bildung der Einwölbung bei einem erfindungsgemäßen Gassack nach einem bevorzugten Ausführungsbeispiel, wobei der Stoffstreifen insbesondere mit der Seitenstoffbahn gemäß Fig. 1 und der Hauptstoffbahn gemäß Fig. 2 kombinierbar ist;
Fig. 4 zwei Fangbänder für einen erfindungsgemäßen Gassack nach einem bevorzugten Ausführungsbeispiel;
Fig. 5 eine Hauptstoffbahn eines erfindungsgemäßen Gassacks nach einem weiteren Ausführungsbeispiel, wobei die Hauptstoffbahn mit der Seitenstoffbahn gemäß Fig. 1 kombinierbar ist;
Fig. 6 eine Seitenansicht eines erfindungsgemäßen Gassacks nach einem bevorzugten Ausführungsbeispiel; und
Fig. 7 eine Draufsicht auf einen erfindungsgemäßen Gassack nach einem weiteren bevorzugten Ausführungsbeispiel.

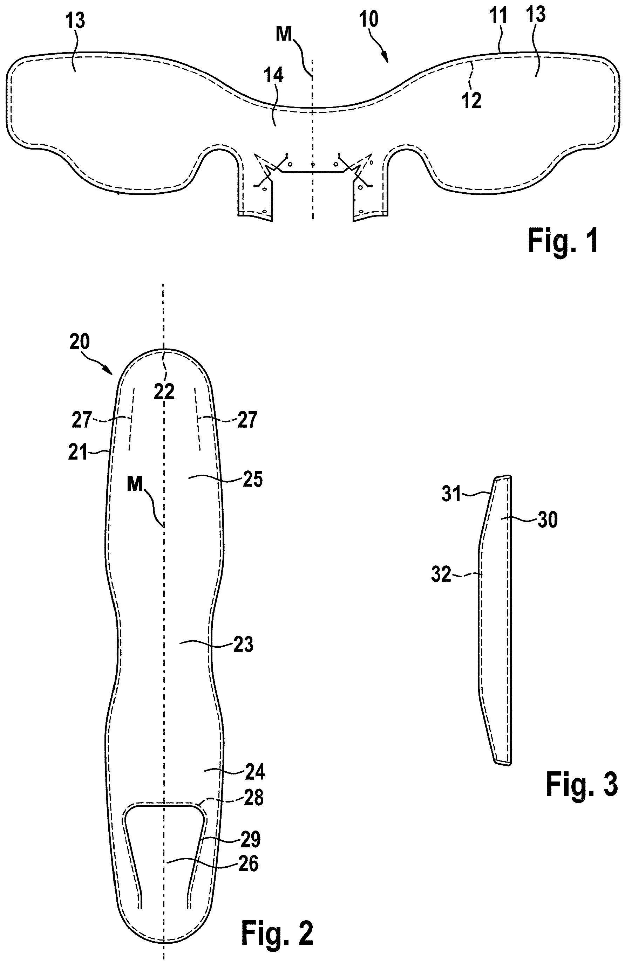

In den Fig. 1 bis 4 sind verschiedene Teile eines Gassacks 100 für einen Fahrersitzplatz eines Fahrzeugs gezeigt, die in ihrer Kombination, insbesondere im zusammengenähten Zustand, gemeinsam den Gassack 100 bilden. Konkret zeigt Fig. 1 eine Seitenstoffbahn 10 des Gassacks 100. Die Seitenstoffbahn 10 weist einen äußeren Rand 11 auf, an dem eine Randnaht 12 der Seitenstoffbahn 10 ausgebildet ist. Die Seitenstoffbahn 10 weist einen mittleren Abschnitt 14 auf, an den sich beidseitig jeweils ein Flügelabschnitt 13 anschließt. Die Seitenstoffbahn 10 ist vorzugsweise einstückig aus einem einheitlichen Textilmaterial gebildet.

Der mittlere Abschnitt 14 der Seitenstoffbahn 10 nimmt im montierten Zustand der Seitenstoffbahn 10 als Teil des Gassacks 100 vorzugsweise einen Gasgenerator auf, bildet also den Einblasmund und somit den Bereich, in welchem das Gas aus dem Gasgenerator zuerst einströmt. Die Flügelabschnitte 13 bilden die Seitenwände des Gassacks 100.

Fig. 2 zeigt eine Hauptstoffbahn 20 des Gassacks 100, wobei die Hauptstoffbahn 20 einen äußeren Rand 21 aufweist, der ebenfalls eine Randnaht 22 der Hauptstoffbahn 20 umfasst. Die Randnaht 22 der Hauptstoffbahn 20 ist vorzugsweise mit der Randnaht 12 der Seitenstoffbahn 10 verbunden bzw. bildet im Wesentlichen eine einheitliche Naht. Die Hauptstoffbahn weist einen vorderen Abschnitt 23 auf, der mit einem unteren Abschnitt 24 und einem oberen Abschnitt 25 verbunden ist. Im Wesentlichen ist die Hauptstoffbahn 20, insbesondere deren vorderer Abschnitt 23, deren unterer Abschnitt 24 und deren oberer Abschnitt 25, einstückig aus einem einheitlichen Textilmaterial gebildet.

Der vordere Abschnitt 23 liegt dem mittleren Abschnitt 40 der Seitenstoffbahn 10 vorzugsweise gegenüber, wenn der Gassack 100 durch Zusammennähen der Seitenstoffbahn 10 und der Hauptstoffbahn 20 gebildet ist. Der vordere Abschnitt 23 der Hauptstoffbahn 20 bildet also im zusammengestellten Zustand als Teil des Gassacks 100 dessen vordere Gassackfläche. Die vordere Gassackfläche ist vorzugsweise diejenige Fläche, die von einem Fahrzeuginsassen im Falle eines Aufpralls zuerst berührt wird. Konkret taucht also ein Fahrzeuginsasse vorzugsweise in die vordere Fläche des Gassacks 100, also dem vorderen Abschnitt 23 der Hauptstoffbahn 20, ein.

Der untere Abschnitt 24 und der obere Abschnitt 25 erstrecken sich über eine Unterseite des Gassacks 100 bzw. eine Oberseite des Gassacks 100, wobei deren Enden vorzugsweise mit dem mittleren Abschnitt 14 der Seitenstoffbahn 10 vernäht sind. Dementsprechend sind die Enden der Flügelabschnitte 13 der Seitenstoffbahn 10 vorzugsweise mit dem vorderen Abschnitt 23 der Hauptstoffbahn 20 vernäht.

Die Hauptstoffbahn 20 weist ferner eine Klappe 26 auf, die im unteren Abschnitt 24 ausgebildet ist. Die Klappe 26 kann derart gebildet sein, dass der untere Abschnitt 24 der Hauptstoffbahn 20 einen Schlitz 29 aufweist, die Hauptstoffbahn 20 also bereichsweise geschlitzt ist. In Fig. 2 ist der Schlitz 29 der Klappe 26 im Wesentlichen U-förmig mit einer leicht trapezförmigen Kontur gebildet.

Im oberen Abschnitt 25 weist die Hauptstoffbahn 20 zwei Fangbandnähte 27 auf. Die Fangbandnähte 27 erstrecken sich im Wesentlichen in Längsrichtung der Hauptstoffbahn 20 und verlaufen weitgehend parallel zu ihren naheliegenden Randnähten 22 der Hauptstoffbahn 20.

Fig. 3 zeigt ein weiteres Teil des Gassacks 100, wobei es sich hierbei um einen Stoffstreifen 30 handelt. Der Stoffstreifen 30 weist ebenfalls einen äußeren Rand 31 auf, entlang dessen sich eine Randnaht 33 des Stoffstreifens 30 erstreckt. Die Länge des Stoffstreifens 30 entspricht vorzugsweise der Länge des Schlitzes 29 im unteren Abschnitt der Hauptstoffbahn 20, welcher die Klappe 26 begrenzt bzw. bildet. Die Randnaht 32 des Stoffstreifens 30 ist vorzugsweise mit einer Klappennaht 28 einerseits und mit einer weiteren Naht der Hauptstoffbahn 20 verbunden. Die Klappennaht 28 erstreckt sich entlang des Schlitzes 29, den die Klappe 26 bildet. Die Klappennaht 28 ist auf der Klappe 26 angeordnet. Im unteren Abschnitt 24 der Hauptstoffbahn 20 ist vorzugsweise eine weitere Naht vorgesehen, die sich ebenfalls entlang des Schlitzes 29 der Klappe 26 erstreckt, jedoch dem Stoffteil des unteren Abschnitts 24 zugeordnet ist, der nicht der Klappe 26 zugehörig ist. Der Stoffstreifen 30 ist vorzugsweise mit beiden diesen Nähten verbunden, so dass sich die Klappe 26 von dem unteren Abschnitt 24 der Hauptstoffbahn 20 abhebt, jedoch weiterhin mit dem unteren Abschnitt 24 der Hauptstoffbahn 20 über den Stoffstreifen 30 verbunden ist. Auf diese Weise wird eine Einwölbung 45 im unteren Abschnitt 24 der Hauptstoffbahn 20 gebildet, die es ermöglicht, dass der Gassack 100 einer Störkontur ausweicht.

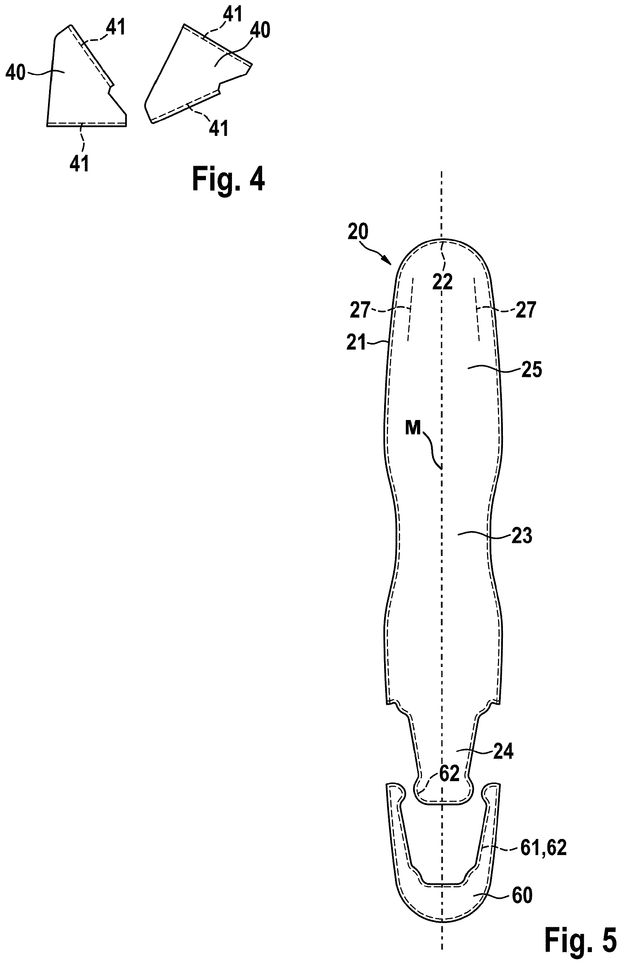

Um zu erreichen, dass sich die Einwölbung 45 beim Befüllen des Gassacks 100 tatsächlich bildet, sind zusätzlich die Fangbänder 40 vorgesehen, deren Schnittmuster in Fig. 4 gezeigt ist. Die Fangbänder 40 sind aus einem Stoffstreifen gebildet, wobei die Fangbänder 40 zwei Randnähte 41 aufweisen. Die Randnähte 41 jedes Fangbands 40 sind zueinander winklig angeordnet, wobei eine Randnaht 41 des Fangbands 40 mit einer Fangbandnaht 47 des oberen Abschnitts 25 der Hauptstoffbahn 20 verbunden ist. Die andere Randnaht 41 des Fangbands 40 ist vorzugsweise mit der Klappe 26 verbunden. Auf diese Weise ist sichergestellt, dass die Klappe 26 beim Befüllen des Gassacks 100 zum oberen Abschnitt 25 der Hauptstoffbahn 20 gezogen wird, so dass sich die Einwölbung 45 ausbildet. Mit anderen Worten verhindert das Fangband 40, dass sich die Klappe 26 nach außen wölbt und somit keine Einwölbung 45 entsteht.

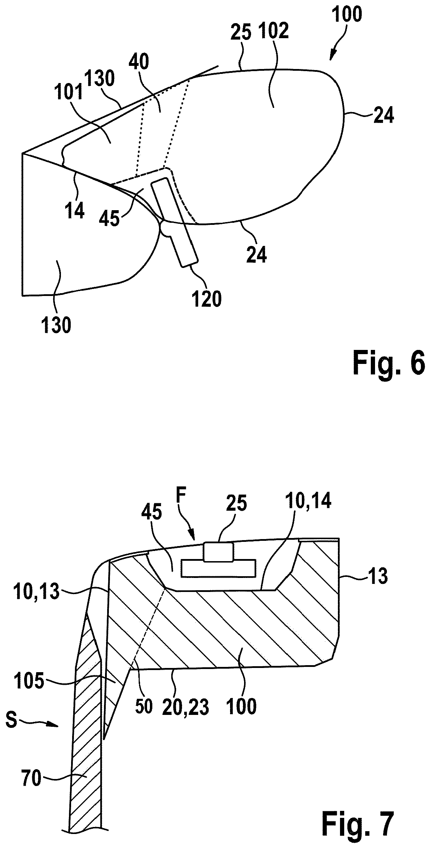

Dieses Prinzip ist gut in Fig. 6 erkennbar. Fig. 6 zeigt eine Seitenansicht eines Gassacks 100, wobei der Gassack 100 aus einem Armaturenbrett 110 vorspringt. Das Armaturenbrett 110 ist unterhalb einer Windschutzscheibe 130 montiert und trägt ein Lenkrad 120.

Der Gassack 100 umfasst einen Überbrückungsabschnitt 101 und einen Wirkabschnitt 102. Der Überbrückungsabschnitt 101 und der Wirkabschnitt 102 sind gemeinsam aus der Seitenstoffbahn 10, der Hauptstoffbahn 20 und den Fangbändern 40 gebildet. Der mittlere Abschnitt 40 der Seitenstoffbahn 10 befindet sich im Überbrückungsabschnitt 101. Der vordere Abschnitt 23 der Hauptstoffbahn 20 befindet sich im Wirkabschnitt 102.

Der Überbrückungsabschnitt 101 erstreckt sich ausgehend vom Armaturenbrett 110 entlang der Windschutzscheibe 130 bis zum Lenkrad 120. Der Wirkabschnitt 102 spannt sich im befüllten Zustand des Gassacks 100 vor dem Lenkrad 120 auf. Damit verhindert der Wirkabschnitt 102, dass ein Fahrzeuginsasse auf das Lenkrad 120 trifft.

Im Wirkabschnitt 102 ist die rückwärtige Einwölbung 45 gebildet, die das Lenkrad 120 aufnimmt. Mit anderen Worten wird mit der Einwölbung 45 erreicht, dass sich der Gassack 100 um das Lenkrad 120 herum entfalten kann, ohne von der Störkontur des Lenkrads 120 an der Entfaltung gehindert zu werden. Die rückwärtige Einwölbung 45 kann sich bis in den Überbrückungsabschnitt 101 erstrecken. Vorzugsweise ist die Einwölbung 45 so gestaltet, dass sich Teile des Gassacks 100 auch seitlich um das Lenkrad 120 erstrecken können. Ebenfalls oberhalb des Lenkrads 120 kann der Gassack 100 über selbiges hinübertreten und so den Wirkabschnitt 102 vor dem Lenkrad 120 aufspannen. Der Überbrückungsabschnitt 101 erstreckt sich insoweit ausgehend vom Armaturenbrett 110 bis über das Lenkrad 120.

In Fig. 6 ist außerdem ein Fangband 40 angedeutet, das sich quer durch den Überbrückungsabschnitt 101 erstreckt und insbesondere den unteren Abschnitt 24 der Hauptstoffbahn 20 mit dem oberen Abschnitt 45 der Hauptstoffbahn 20 verbindet. Auf diese Weise verhindert das Fangband 40, dass sich der untere Abschnitt 24 der Hauptstoffbahn 20 nach unten wölbt und so mit dem Lenkrad 120 kollidieren würde. Vielmehr wird der untere Abschnitt 24 bzw. die Klappe 26 nach oben gezogen, so dass sich der Überbrückungsabschnitt 101 über das Lenkrad 120 hinweg erstrecken kann.

Der Gassack 100 ist vorzugsweise aus einer Vielzahl von Gleichteilen gebildet. Insbesondere die Seitenstoffbahn 10 kann ein Standardteil sein, das üblicherweise für Beifahrersäcke eingesetzt wird. Ebenso ist vorzugsweise die Hauptstoffbahn 20 ein Standardteil für beifahrerseitige Gassäcke 100, das für die vorliegende Anwendung lediglich minimal modifiziert wird, um die Einwölbung 45 zu bilden und so den Gassack 100 auch auf einer Fahrerseite eines Fahrzeugs einsetzen zu können.

Fig. 5 zeigt eine alternative Modifikation einer Hauptstoffbahn 20, wobei diese die Gassackteile gemäß Fig. 2 und 3 ersetzen kann. Die Hauptstoffbahn gemäß Fig. 5 ist zweigeteilt und weist eine Ansatzstoffbahn 60 auf. Die Ansatzstoffbahn ist durch eine konturierte Verbindungsnaht 61 mit dem unteren Abschnitt 24 der Hauptstoffbahn 20 verbunden. Die Verbindungsnaht 61 ist vorzugsweise strukturiert, so dass die Verbindungsnaht 61 eine Raffnaht 62 bildet. Der untere Abschnitt 24 der Hauptstoffbahn 20 wird dabei stellenweise gerafft, so dass sich auf diese Weise die Einwölbung 45 bildet. Ein Stoffstreifen 30 gemäß Fig. 3 ist damit nicht erforderlich. Ein Gassack 100, der mit der Hauptstoffbahn 20 gemäß Fig. 5 ausgebildet wird, umfasst vorzugsweise jedoch eine Seitenstoffbahn 10 gemäß Fig. 1 und Fangbänder 40 gemäß Fig. 4.

Fig. 7 zeigt eine weitere Modifikation des Gassacks 100, die in bevorzugten Ausführungsbeispielen vorgesehen ist. Der Gassack 100 umfasst einen Überbrückungsabschnitt 101 und einen Wirkabschnitt 102, wobei sich der Wirkabschnitt 102 vor einem Lenkrad 120 aufspannt. Der Gassack 100 ist in eine Fahrzeugkabine eingebettet, die eine Front F und eine Seite S aufweist. Der Gassack 100 erstreckt sich vorzugsweise ausgehend von der Front F in den Fahrzeuginnenraum. Von der Seite S ist zusätzlich ein Seitenfenstergassack 70 vorgesehen, der sich entlang der Seite S, insbesondere entlang eines Seitenfensters erstreckt. Bei herkömmlichen Gassäcken 100 besteht das Risiko, dass ein Fahrzeuginsasse beim Aufprall auf den Gassack 100 seitlich abrutscht und in eine Lücke zwischen dem Seitenfenstergassack 70 und dem Gassack 100 gerät.

Um dies zu vermeiden ist bei dem Ausführungsbeispiel gemäß Fig. 7 vorgesehen, dass der Gassack 100 ein weiteres Fangband 50 aufweist, das sich vom mittleren Abschnitt 14 der Seitenstoffbahn 10 zum vorderen Abschnitt 23 der Hauptstoffbahn 20 erstreckt. Weiterhin ist die Seitenstoffbahn 10 und/oder die Hauptstoffbahn 20 im Gegensatz zu den Ausführungsformen der Figuren 1, 2 und 5 zumindest abschnittsweise asymmetrisch ausgebildet. Hierbei weisen die Seitenstoffbahn 10 im dem zur Seite S weisenden Flügelabschnitt 13 und/oder die Hauptstoffbahn 20 im dem zur Seite S weisenden Abschnitt, insbesondere im Bereich des vorderen Abschnitts 23, einen Stoffüberschuss gegenüber der bezüglich einer Spiegelachse M gegenüberlegenden Seite auf, sodass sich ein dem Seitenfenstergassack 70 zugewandter Teil des Gassacks 100 weiter befüllen lässt. Durch das Fangband 50 wird der Teil des Gassacks 100, der sich weiter befüllen, derart an einer weiteren Vorwölbung in Richtung des Fahrzeuginsassen bzw. der Fahrzeuginsassin gehindert, dass ein seitlicher Fortsatz 105 gebildet wird, der über den vorderen Abschnitt 24 der Hauptstoffbahn 20 hervorsteht und die Lücke zwischen dem Gassack 100 und dem Seitenfenstergassack 70 schließt. Der seitliche Fortsatz 105 erstreckt sich also bis in den Bereich des Seitenfenstergassacks 70 hinein. Auf diese Weise ist die Insassensicherheit in einem Kraftfahrzeug weiter erhöht.

### Bezugszeichenliste

- 10: Seitenstoffbahn
- 11: äußerer Rand der Seitenstoffbahn 10
- 12: Randnaht der Seitenstoffbahn 10
- 13: Flügelabschnitt
- 14: mittlerer Abschnitt
- 20: Hauptstoffbahn
- 21: äußerer Rand der Hauptstoffbahn 20
- 22: Randnaht der Hauptstoffbahn 20
- 23: vorderer Abschnitt
- 24: unterer Abschnitt
- 25: oberer Abschnitt
- 26: Klappe
- 27: Fangbandnaht
- 28: Klappennaht
- 29: Schlitz
- 30: Stoffstreifen
- 31: äußerer Rand des Stoffstreifens 30
- 32: Randnaht des Stoffstreifens 30
- 40: Fangband
- 41: Randnaht des Fangbands 40
- 45: Einwölbung
- 50: weiteres Fangband
- 60: Ansatzstoffbahn
- 61: Verbindungsnaht
- 62: Raffnaht
- 70: Seitenfenster Gassack
- 100: Gassack
- 101: Überbrückungsabschnitt
- 102: Wirkabschnitt
- 105: seitlicher Fortsatz
- 110: Armaturenbrett
- 120: Lenkrad
- 130: Windschutzscheibe

- F: Front
- S: Seite
- M: Spiegelachse

## Patentansprüche

1. Gassack (100) für einen Fahrersitzplatz eines, insbesondere mehrspurigen, Fahrzeugs mit einer Seitenstoffbahn (10) und einer Hauptstoffbahn (20), deren Ränder (11, 21) so miteinander vernäht sind, dass sich ein Gassackvolumen bildet, wobei die Seitenstoffbahn (10)
- zwei Flügelabschnitte (13), die jeweils eine Seitenwand des Gassacks (100) bilden, und
- einen mittleren Abschnitt (14) aufweist, der die Flügelabschnitte (13) verbindet, und
wobei die Hauptstoffbahn (20)
- einen oberen Abschnitt (25) und einen unteren (24) Abschnitt aufweist, die mit den Flügelabschnitten (13) vernäht und durch einen vorderen Abschnitt (23) miteinander verbunden sind, und
- im unteren Abschnitt (24) wenigstens eine Klappe (26) mit einem zusätzlichen Stoffstreifen (30) oder eine Raffnaht (62) vorgesehen ist,
und wobei wenigstens ein sich durch das Gassackvolumen erstreckendes Fangband (40) einerseits mit dem oberen Abschnitt (25) und andererseits mit der Klappe (26) oder der Raffnaht (62) verbunden ist, um im befüllten Zustand des Gassacks (100) eine Einwölbung (45) zur Umgehung einer Störkontur zu bilden.

2. Gassack (100) nach Anspruch 1,
**dadurch gekennzeichnet, dass**
das Fangband (40) so bemessen ist, dass beim Befüllen des Gassacks (100) mit einem Gas der Abstand zwischen dem oberen Abschnitt (25) und dem unteren Abschnitt (24) der Hauptstoffbahn (20) begrenzt/festgelegt ist.

3. Gassack (100) nach Anspruch 1 oder 2,
**dadurch gekennzeichnet, dass**
der zusätzliche Stoffstreifen (30) so mit dem unteren Abschnitt (24) verbunden ist, dass sich die Klappe (26) und der untere Stoffstreifen (30) in einem faltenfreien Zustand in unterschiedlichen Ebenen erstrecken.

4. Gassack (100) nach einem der vorhergehenden Ansprüche,
**dadurch gekennzeichnet, dass**
die Klappe (26) durch einen im Wesentlichen u-förmigen Schlitz (29) im unteren Abschnitt (24) der Hauptstoffbahn (10) begrenzt ist, dessen Schlitzränder mit dem zusätzlichen Stoffstreifen (30) verbunden sind.

5. Gassack (100) nach einem der vorhergehenden Ansprüche,
**dadurch gekennzeichnet, dass**
die Hauptstoffbahn (10) im unteren Abschnitt (24) mittels der Raffnaht (62) mit einer Ansatzstoffbahn (60) verbunden ist.

6. Gassack (100) nach einem der vorhergehenden Ansprüche,
**dadurch gekennzeichnet, dass**
die Störkontur ein Lenkrad (120) ist, wobei die Einwölbung (45) so ausgebildet ist, dass sich der Gassack (100) im befüllten Zustand seitlich um das Lenkrad (120) und über eine Vorderseite des Lenkrads (120) erstreckt.

7. Gassack (100) nach einem der vorhergehenden Ansprüche,
**dadurch gekennzeichnet, dass**
die Störkontur ein Display ist, wobei die Einwölbung (45) so ausgebildet ist, dass sich der Gassack (100) im befüllten Zustand seitlich um das Display und über eine Vorderseite des Displays erstreckt.

8. Gassack (100) nach einem der vorhergehenden Ansprüche,
**dadurch gekennzeichnet, dass**
sich ein zusätzliches Fangband (50) vom mittleren Abschnitt (14) der Seitenstoffbahn (10) zum vorderen Abschnitt (23) der Hauptstoffbahn (10) erstreckt, das beim Befüllen des Gassacks (100) einen Abstand zwischen dem mittleren Abschnitt (14) der Seitenstoffbahn (10) und dem vorderen Abschnitt (23) der Hauptstoffbahn (20) begrenzt, so dass im befüllten Zustand des Gassacks (100) ein seitlicher Fortsatz (105) ausgebildet ist, der über den vorderen Abschnitt (23) vorsteht.

9. Gassack (100) eines mehrspurigen Fahrzeugs, das ein Armaturenbrett (110) und ein vor dem Armaturenbrett (110) angeordnetes Lenkrad (120) oder ein vor dem Armaturenbrett (110) angeordnetes Display aufweist, wobei der Gassack (100) einen Überbrückungsabschnitt (101), der sich im befüllten Zustand des Gassacks (100) aus dem Armaturenbrett (110) heraus und über das Lenkrad (120) oder das Display erstreckt, und einen Wirkabschnitt (102) umfasst, der sich im befüllten Zustand des Gassacks (100) vor dem Lenkrad (120) oder dem Display aufspannt, wobei der Gassack (100) zumindest im Wirkabschnitt (102) eine rückwärtige Einwölbung (45) aufweist, die im befüllten Zustand des Gassacks (100) das Lenkrad (120) oder das Display aufnimmt.

10. Gassack (100) nach Anspruch 9,
**dadurch gekennzeichnet, dass**
im Überbrückungsabschnitt (101) wenigstens ein Fangband (40) vorgesehen sind, das eine Entfaltung des Überbrückungsabschnitts (101) begrenzt, um die rückwärtige Einwölbung (45) zu bilden.

11. Gassack (100) nach einem der Ansprüche 9 bis 10,
**dadurch gekennzeichnet, dass**
ein seitlicher Fortsatz (105) vorgesehen ist, der im befüllten Zustand des Gassacks (100) eine Lücke zwischen dem Wirkabschnitt (102) und einem Seitenfenstergassack (70) schließt.

12. Gassack (100) nach einem der Ansprüche 9 bis 11,
**dadurch gekennzeichnet, dass**
der Gassack (100) nach einem der Ansprüche 1 bis 8 ausgebildet ist.

13. Gassackmodul zum Einbau in ein Armaturenbrett (110), insbesondere hinter einem Lenkrad (120) oder einem Bildschirm, mit einem Gassack (100) nach einem der vorhergehenden Ansprüche und einem Gasgenerator, der mit dem Gassack (100) fluiddicht verbunden ist.

14. Fahrzeuginsassensicherheitssystem mit einem Gassack (100) oder Gassackmodul nach einem der vorhergehenden Ansprüche.

15. Fahrzeug mit einem Gassack (100), einem Gassackmodul und/oder einem Fahrzeuginsassensicherheitssystem nach einem der vorhergehenden Ansprüche.
